# EUROPEAN PATENT SPECIFICATION

(11) **EP 3 067 597 B1**
(45) Date of publication and mention of the grant of the patent: **07.08.2019**
(21) Application number: 15158175.8
(22) Date of filing: 09.03.2015
(51) Int. Cl.: F16K 5/04, F16K 11/085

(54) **Use of a fluid control valve**
Verwendung eines Flussregelventils
Utilisation d'une valve de contrôle de fluide

(43) Date of publication of application: 14.09.2016
(73) Proprietor: ESBE AB, 333 75 Reftele (SE)
(72) Inventor: Davidsson, Jonas, 331 51 VÄRNAMO (SE)
(74) Representative: AWA Sweden AB

(56) References cited:
- WO-A1-2014/138786
- FR-A1- 2 719 100
- FR-A5- 2 204 281
- US-A- 3 938 553
- US-A- 6 138 628

## Description

### Field of the Invention

The present invention relates to the use of a fluid control valve comprising a valve housing with a valve chamber having at least two valve ports distributed around a circumferential chamber wall of the valve chamber, a valve rotor, which is rotatably arranged inside said valve chamber and comprises a blocking portion and a flow passage, wherein the valve rotor is rotatable between a closed position, in which one of said at least two valve ports is blocked by said blocking portion, and a first open position, in which the flow passage of the valve rotor allows fluid communication between said at least two valve ports, a groove arrangement formed in the valve rotor, and a sealing member which is configured to be received in the groove arrangement and move together with the valve rotor as claimed in claim 1.

### Background of the Invention

A valve of this type may be used in a domestic heating and/or cooling system.

US 3,938,553 discloses a valve having a valve body, a valve cavity, a first opening and a second opening with a valve member rotatably positioned within the valve cavity. In providing a seal between the valve member and the valve cavity the exterior surface of the valve member has a first groove, in which a first seal member is retained, and a second groove, in which a second seal member is received.

A drawback of this valve is that assembly of the valve may be regarded as time-consuming and/or complex.

US 6,138,628 A1 discloses a valve having a valve rotor arranged in a valve housing wherein a single-piece sealing member is inserted into a groove arrangement having two cicumferential and two axial groove portions formed within the valve rotor. The valve is used in an air intake manifold system for an internal combustion engine.

Further WO2014/138786A1 discloses a rotary valve for use in a heating system according to the preamble of claim 1.

### Summary of the Invention

It is an object of the present invention to overcome the above described drawback.

This and other objects that will be apparent from the following summary and description are achieved by a fluid control valve according to the appended claims.

According to the present invention there is provided the use of a liquid control valve according to claim 1, the control valve comprising a valve housing with a valve chamber having at least two valve ports distributed around a circumferential chamber wall of the valve chamber, a valve rotor, which is rotatably arranged inside said valve chamber and comprises a blocking portion and a flow passage, wherein the valve rotor is rotatable between a closed position, in which one of said at least two valve ports is blocked by said blocking portion, and a first open position, in which the flow passage of the valve rotor allows fluid communication between said at least two valve ports, a groove arrangement formed in the valve rotor, and a sealing member which is configured to be received in the groove arrangement and move together with the valve rotor, wherein the sealing member is formed as a single piece and comprises a sealing portion, which is configured to surround said blocking portion, and at least a first anchoring portion projecting from one side of said sealing portion and being configured to fasten the sealing member to the valve rotor.

When installed in the groove arrangement the sealing member provides a seal between the valve rotor and the chamber wall around the blocking portion of the valve rotor. The single piece sealing member provides for a reliable sealing between the valve rotor and the chamber wall of the valve housing. The sealing member thus prevents valve leakage. Hence, a leak free rotary valve may be provided in a cost-efficient manner. Furthermore, since the sealing member is formed as a single piece it may be installed in the groove arrangement in an easy manner.

The first anchoring portion, which secures that the sealing member is held in place, is integrally formed with the sealing portion. The anchoring portion is thus configured to hold the sealing member in place. Hence, the anchoring portion "locks" the sealing member to the valve rotor so that the sealing member rotates together with the valve rotor.

Upon installation of the sealing member the anchoring portion is stretched. The anchoring portion of the sealing member projects from the sealing portion. This has the advantage that a very reliable installation of the sealing member in the groove arrangement is achieved.

The sealing member, which comprises a sealing portion and an anchoring portion, is thus configured to be received in the groove arrangement and move together with the valve rotor. Hence, the sealing member groove arrangement is configured to prevent relative movement between the sealing member and the valve rotor. Upon rotation of the valve rotor the sealing member thus moves, together with the valve rotor, relative to the chamber wall.

According to the invention the first anchoring portion comprises at least one anchor for engagement with a portion of said groove arrangement. This has the advantage that a very easy installation is enabled. Furthermore, a very robust and reliable installation of the sealing member is achieved.

According to the invention said at least one anchor is arranged at a free end of said anchoring portion.

According to one embodiment said at least one anchor is configured for engagement with a recess, such as, e.g., a circular, an elliptical or a T-shaped recess, of said groove arrangement.

According to one embodiment said at least one anchor is circular, elliptical or T-shaped.

According to one embodiment said first anchoring portion comprises at least two anchors.

According to one embodiment the first anchoring portion comprises a first elongated member, such as an elastic strap, having at a free end thereof an anchor for holding the sealing member in place in the groove arrangement. Preferably, the first anchoring portion further comprises a second elongated member, such as an elastic strap, having at a free end thereof an anchor for holding the sealing member in place in the groove arrangement.

According to one embodiment said sealing member is ladder-shaped.

According to one embodiment the sealing member comprises a second anchoring portion projecting from an opposite side of said sealing portion, which provides for a very robust and reliable installation of the sealing member in the sealing member groove arrangement.

According to one embodiment said second anchoring portion comprises an anchor for engagement with a portion of said groove arrangement.

According to one embodiment said second anchoring portion comprises at least one anchor for engagement with said groove arrangement.

According to one embodiment said first anchoring portion comprises a first anchor arranged at a first free end thereof and a second anchor arranged at a second free end thereof, and said second anchoring portion comprises a first anchor arranged at a first free end thereof and a second anchor arranged at a second free end thereof.

According to one embodiment said first anchoring portion comprises at least two anchors.

According to one embodiment the sealing member is formed from an elastomeric material. The sealing member is then maintained in the sealing member groove due to the inherent elasticity of the elastic sealing member.

According to one embodiment the sealing member comprises two parallel side members and at least two intermediate members extending therebetween. The intermediate members connect the side members to each other. Such a ladder-shaped sealing member is very easy to install.

According to one embodiment the sealing member comprises two parallel side members and at least three intermediate members extending therebetween.

According to one embodiment said valve housing has at least three valve ports, wherein the valve rotor is rotatable between a closed position, in which said blocking portion of the valve rotor prevents a flow of fluid through the valve, and a first open position, in which the flow passage of the valve rotor allows fluid communication between at least two of said valve ports.

According to one embodiment the fluid control valve is a three-way valve.

According to one embodiment the fluid control valve is a four-way valve.

According to one embodiment the fluid control valve has two inlet ports and one outlet port.

According to one embodiment the fluid control valve has three inlet ports and one outlet port.

These and other aspects of the invention will be apparent from and elucidated with reference to the claims and the embodiments described hereinafter.

### Brief description of the drawings

The invention will now be described in more detail with reference to the appended schematic drawings in which:
Fig. 1 shows, in an exploded perspective view, a fluid control valve according to an embodiment of the present disclosure.
Figs. 2a-b show a valve rotor of the fluid control valve shown in Fig. 1.
Fig. 3 shows a sealing member of the fluid control valve shown in Fig. 1.
Figs. 4a-b illustrate installation of a sealing member in a sealing member groove arrangement of the valve rotor of the fluid control valve shown in Fig. 1.
Fig. 5 shows, in an exploded perspective view, a fluid control valve according to a second embodiment of the present disclosure.

### Description of preferred embodiments

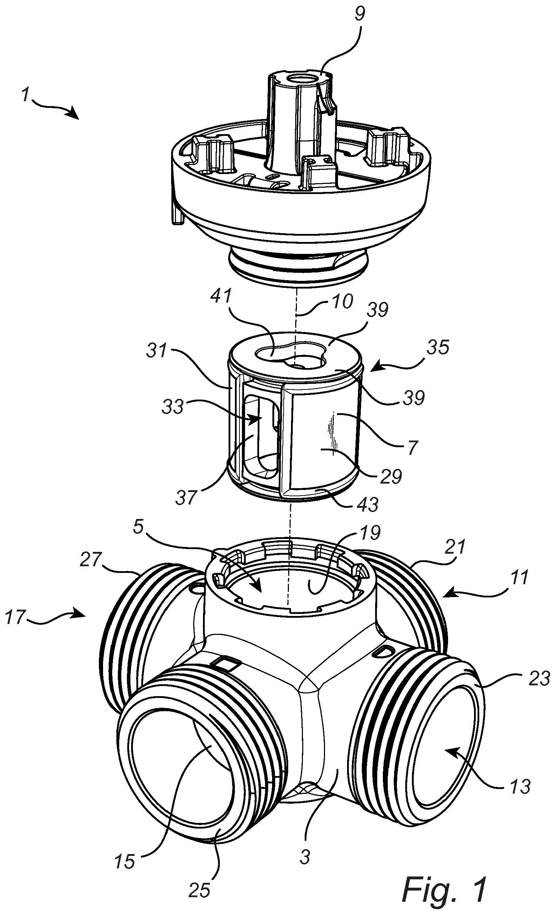

Fig. 1 illustrates a fluid control valve 1. The fluid control valve 1 is shown in an exploded view to facilitate the illustration of different features thereof. The fluid control valve 1 is intended for controlling flow of liquid in a pipe system and may be used e.g. for controlling liquid flow in a heating and/or cooling system in a building. The fluid control valve 1 may be connected as a mixing valve to mix streams of fluid, as a diverting valve or as a combined mixing and diverting valve.

The fluid control valve 1 comprises a housing 3, defining a circular cylindrical valve chamber 5, a rotor 7 and an operating spindle 9 for operating the rotor 7. The operating spindle 9 is configured to be connected to a knob for manual valve control, or to an electronic controller for automatic valve control. To this end the rotor 7 is shaped to unrotatably engage with a driver of the operating spindle 9. The rotor 7 is rotatable around a rotor center axis 10.

The valve chamber 5 comprises four ports 11, 13, 15, 17 distributed around a circumferential chamber wall 19 and four connecting conduits 21, 23, 25, 27. Each of the four connecting conduits 21, 23, 25, 27, which are arranged on equal height around the circumferential chamber wall 19, is fluidly connected to the valve chamber 5 by a respective one of the four ports 11, 13, 15, 17. The first port 11 and the associated connecting conduit 21 are situated opposite to the third port 15 and the associated connecting conduit 25 and the second port 13 and the associated connecting conduit 23 are situated opposite to the fourth port 17 and the associated connecting conduit 27. The size of all four ports 11, 13, 15, 17 is such that intact parts of the circumferential chamber wall 19 remain around all four ports 11, 13, 15, 17. In this embodiment each of the ports 13, 15 and 17 forms an inlet port and the first port 11 forms an outlet port.

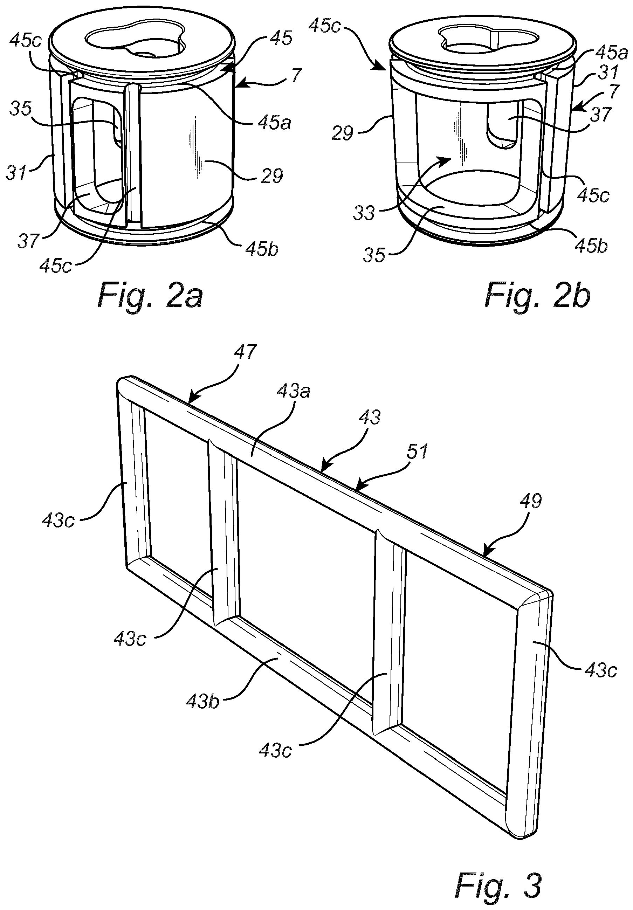

The rotor 7 comprises a first blocking portion 29, a second blocking portion 31 and a flow passage 33. Each of the first and second blocking portions 29, 31 is capable of blocking possible fluid paths through the valve 1. The flow passage 33, which has an inlet and an outlet, is disposed between the blocking portions 29, 31 and enables fluid communication through the valve rotor 7. The flow passage inlet is formed by a first side opening 35, illustrated in Fig. 2b, of the valve rotor 7 and the flow passage outlet is formed by a second side opening 37, illustrated in Fig. 2a, of the valve rotor 7.

The rotor 7 is rotatably seated inside the chamber 5 of the valve housing 3 and is rotatable around the rotor center axis 10 between different operating positions to control fluid flow through the valve 1. As illustrated in Fig. 1 the overall shape of the rotor 7 is circular cylindrical. A top plateau 39 of the rotor 7 has a groove 41, shaped to unrotatably engage with a driver of the operating spindle 9 in order to enable manual or automatic control of the valve 1 by rotating the rotor 7 such that the four port arrangement openings 11, 13, 15, 17 are opened totally or partly or closed.

The valve rotor 7 comprises a sealing member in the form of an elastic sealing member 43.

Fig. 2a and Fig. 2b show different sides of the valve rotor 7 without the sealing member 43 to facilitate the illustration of certain features of the valve rotor 7. A sealing member groove arrangement 45 is formed in the valve rotor 7. The sealing member groove arrangement 45 is adapted to receive the sealing member 43. To this end the sealing member groove arrangement 45 comprises several groove portions 45a, 45b, 45c, each of which is adapted to receive a part of the sealing member 43. In this embodiment the sealing member groove arrangement 45 comprises a first circumferential groove portion 45a, a second circumferential groove portion 45b and four axial grove portions 45c.

The rotor 7 is arranged to sealingly contact the circumferential chamber wall 19 and to close at least one of the valve ports 11, 13, 15, 17. In the valve rotor position illustrated in Fig. 1 the second port 13, i.e. one of the inlet ports of the valve 1, is closed by the first blocking portion 29 of the valve rotor 7 and the fourth port 17, i.e. another one of the inlet ports of the valve 1, is closed by the second blocking portion 31 of the valve rotor 7, while the flow passage 33 of the valve rotor 7 allows fluid communication between the third port 15, i.e. one of the inlet ports of the valve 1, and the first port 11, i.e. the outlet port of the valve 1.

As mentioned hereinbefore, the valve rotor 7 comprises a flow passage 33 for fluid communication therethrough, which flow passage 33 has an inlet 35, illustrated in Fig. 2b, and an outlet 37, illustrated in Fig. 2a. As shown in Fig. 2a and Fig. 2b the size of the flow passage inlet 35 is larger than the flow passage outlet 37.

Fig. 3 shows the sealing member 43. The sealing member 43, which is formed as one single piece, is configured to be received in the sealing member groove arrangement 45 formed in the valve rotor 7 and move together therewith. To this end the sealing member 43 comprises two parallel side members 43a, 43b, each of which is configured to be received in a respective groove portion 45a, 45b of the sealing member groove 45, and intermediate members 43c extending between the parallel side members 43a, 43b and configured to be received in a respective axial groove 45c of the sealing member groove 45. The intermediate members 43c thus connect the parallel side members 43a, 43b with each other. The sealing member 43 is thus ladder-shaped. The distance between the intermediate members 43c, i.e. between the "steps", of the ladder-shaped sealing member 43 corresponds to the distance between the axial portions 45c of the sealing member groove arrangement 45. Furthermore, the distance between the side members 43a, 43b of the sealing member 43 corresponds to the distance between the circumferential groove portions 45a, 45b of the sealing member groove arrangement 45. The sealing member 43 and the sealing member groove 45 are thus complementary in shape.

The ladder-shaped sealing member 43 thus forms a first portion 47, which is configured to surround the first blocking portion 29 of the valve rotor 7, a second portion 49, which is configured to surround the flow passage inlet 35, and a third portion 51, which is configured to surround the second blocking 31 portion of the valve rotor 7. Hence, when the sealing member 43 is received in the sealing member groove 45 the first sealing member portion 47 surrounds the first blocking portion 29 of the valve rotor 7, the second sealing member portion 49 surrounds the flow passage inlet 35 of the valve rotor 7 and the third sealing member portion 51 surrounds the second blocking portion 31 of the valve rotor 7.

Hence, each of the first, second and third sealing member portions 47, 49, 51 forms a sealing portion. Additionally, each of the first and third sealing member portions 47, 49 forms an anchoring portion, i.e. a portion that secures that the sealing member 43 is held in position during use of the valve 1. The first, second and third sealing member portions 47, 49, 51 are integrally formed with each other.

The sealing member 43 is preferably formed from an elastomeric material, such as, e.g., EPDM.

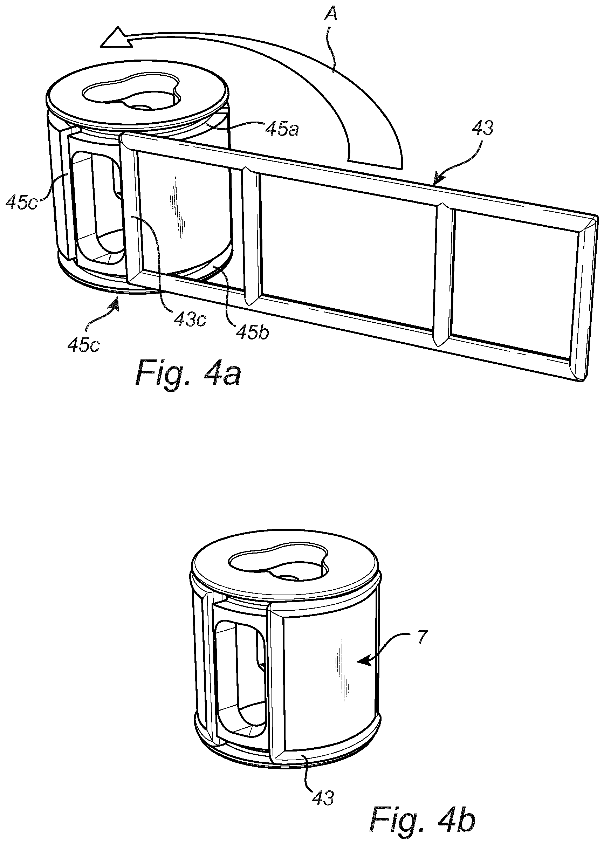

With reference to Figs. 4a-b installation of the sealing member 43 in the groove arrangement 45 of the valve rotor 7 of the fluid control valve 1 will be explained hereinafter.

Fig. 4a shows an intermediate assembling state in which an axial sealing member portion 43c of the sealing member 43 has been placed in an axial groove portion 45c of the sealing member groove arrangement 45. The sealing member 43 is then slightly stretched and "rolled" on the valve rotor 7, as illustrated by arrow A in Fig. 4b, to an installed position, illustrated in Fig. 4b. Upon installation of the sealing member 43 each of the anchoring portions 47, 49 is thus stretched to fasten the sealing member 43 to the valve rotor 7.

In the installed position the sealing member 43 is received in the sealing member groove arrangement 45. The sealing member 43 is maintained in the sealing member groove arrangement 45 due to the inherent elasticity of the elastic sealing member 43.

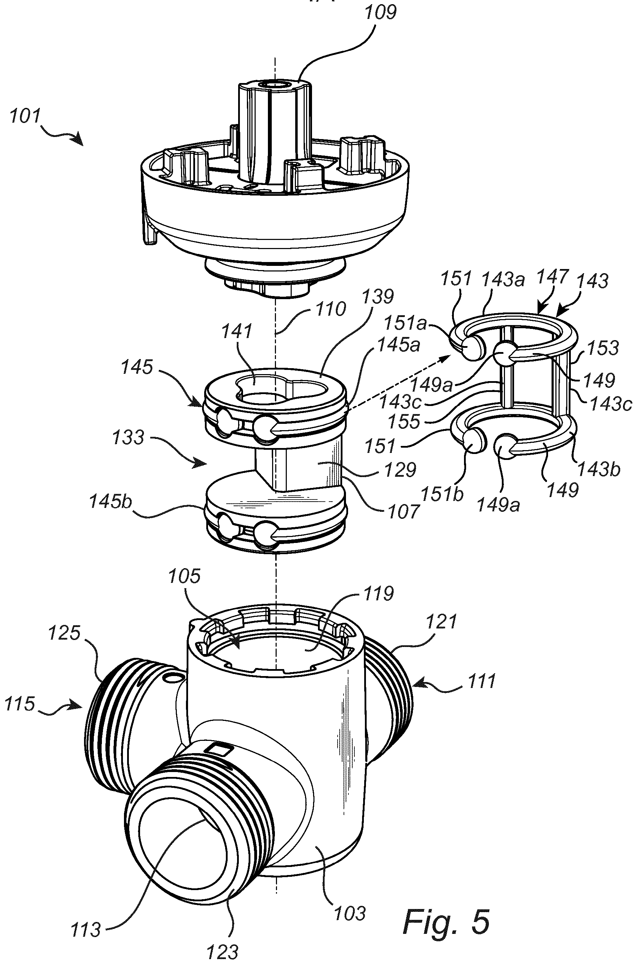

Fig. 5 illustrates, in an exploded view, a fluid control valve 101 according to a second embodiment of the present disclosure. The fluid control valve 101 is intended for controlling flow of liquid in a pipe system and may be used e.g. for controlling liquid flow in a heating and/or cooling system in a building. The fluid control valve 101 may be connected as a mixing valve to mix streams of fluid, as a diverting valve or as a combined mixing and diverting valve.

The fluid control valve 101 comprises a housing 103, defining a circular cylindrical valve chamber 105, a rotor 107 and an operating spindle 109 for operating the rotor 107. The operating spindle 109 is configured to be connected to a knob for manual valve control, or to an electronic controller for automatic valve control. To this end the rotor 107 is shaped to unrotatably engage with a driver of the operating spindle 109. The rotor 107 is rotatable around a rotor center axis 110.

The valve chamber 105 comprises three valve ports 111, 113, 115 distributed around a circumferential chamber wall 119 and three connecting conduits 121, 123, 125. Each of the four connecting conduits 121, 123, 125, which are arranged on equal height around the circumferential chamber wall 119, is fluidly connected to the valve chamber 105 by a respective one of the three ports 111, 113, 115. By way of an example, in this embodiment each of the ports 113 and 115 forms an inlet port and the first port 111 forms an outlet port.

The rotor 107 comprises a blocking portion 129, which is capable of blocking possible fluid paths through the valve 101, and a flow passage 133 which enables fluid communication through the valve 101.

The rotor 107 is rotatably seated inside the chamber 105 of the valve housing 103 and is rotatable around the rotor center axis 110 between different operating positions to control fluid flow through the valve 101. The overall shape of the rotor 107 is circular cylindrical. A top plateau 139 of the rotor 107 has a groove 141, shaped to unrotatably engage with a driver of the operating spindle 109 in order to enable manual or automatic control of the valve 101 by rotating the rotor 107 such that the three valve ports 111, 113, 115 are opened totally or partly or closed.

The valve rotor 107 comprises a sealing member in the form of an elastic sealing member 143.

A sealing member groove arrangement 145 is formed in the valve rotor 107, which groove arrangement 145 is adapted to receive the sealing member 143. To this end the sealing member groove arrangement 145 comprises several groove portions 145a, 145b, each of which is adapted to receive a part of the sealing member 143. In this embodiment the sealing member groove arrangement 145 comprises a first circumferential groove portion 145a, a second circumferential groove portion 145b and two axial grove portions (not shown).

The rotor 107 is arranged to sealingly contact the circumferential chamber wall 119 and to close one of the valve ports 111, 113, 115. In the valve rotor position illustrated in Fig. 5 the first port 111, i.e. the outlet port of the valve 101, is closed by the blocking portion 129 of the valve rotor 107. Fluid flow through the valve 101 is thus blocked when the valve rotor 107 assumes the position illustrated in Fig. 5.

The sealing member 143, which is formed as one single piece, is configured to be received in the sealing member groove arrangement 145 formed in the valve rotor 107 and move together therewith. To this end the sealing member 143 comprises two parallel side members 143a, 143b, each of which is configured to be received in a respective groove portion 145a, 145b of the sealing member groove 145, and intermediate members 143c extending between the parallel side members 143a, 143b and configured to be received in a respective axial groove (not shown) of the sealing member groove arrangement 145. The intermediate members 143c thus connect the parallel side members 143a, 143b with each other. The sealing member 143 is thus ladder-shaped. The distance between the intermediate members 43c, i.e. between the "steps", of the ladder-shaped sealing member 143 corresponds to the distance between the axial portions of the sealing member groove arrangement 145. Furthermore, the distance between the side members 143a, 143b of the sealing member 143 corresponds to the distance between the circumferential groove portions 145a, 145b of the sealing member groove arrangement 145. The sealing member 143 and the sealing member groove arrangement 145 are thus complementary in shape.

The sealing member 143 comprises a first portion in the form of a sealing portion 147, which is configured to surround the blocking portion 129 of the valve rotor 7. Hence, when the sealing member 143 is received in the sealing member groove arrangement 145 the first sealing member portion 147 surrounds the blocking portion 129 of the valve rotor 107.

The sealing member 143 further comprises a second portion, in the form of a first elastic anchoring portion 149, and a third portion, in the form of a second elastic anchoring portion 151, each of which anchoring portions 149, 151 is mainly configured to secure the sealing member 143 to the valve rotor 107. Hence, the anchoring portions are configured to hold the sealing member in place. To this end each of the first and second anchoring portions 149, 151 comprises two anchors 149a, 149b and 151a, 151b, respectively.

The first anchoring portion 149 comprises a first elongated member having a free end at which the first anchor 149a of the first anchoring portion 149 is arranged and a second elongated member having a free end at which the second anchor 149b of the first anchoring portion 149 is arranged. Furthermore, the second anchoring portion 151 comprises a first elongated member having a free end at which the first anchor 151a of the second anchoring portion 151 is arranged and a second elongated member having a free end at which the second anchor 151b of the second anchoring portion 151 is arranged.

Each of the first and second anchoring portions 149, 151 thus comprises two elongated members, each of which at a free end thereof is provided with an anchor.

As illustrated in Fig. 5 the sealing member groove arrangement 145 of the valve rotor 107 comprises four recesses, in the form of circular recesses, each of which is configured to receive a respective one of the anchors 149a, 149b, 151a, 151b of the sealing member 143.

As illustrated in Fig. 5 the first anchoring portion 149 projects from one side 153 of the sealing portion 147 of the sealing member 143 and the second anchoring portion 151 projects from an opposite side 155 of the sealing portion 147 of the sealing member 143, which secures a robust installation of the sealing member 143. Each of the anchoring portions 149, 151 is integrally formed with the sealing portion 147.

Installation of the sealing member 143 in the sealing ring groove 145 of the valve rotor 107 of the fluid control valve 101 is carried out in a manner similar to that explained hereinabove with reference to Figs. 4a-b.

When fitting the sealing member 143 in the sealing member groove arrangement 145 of the valve rotor body 107, the elastic anchor portions 149, 151 of the sealing member 143 are thus slightly stretched, which secures a robust installation of the sealing member 143. Upon installation of the sealing member 143 each of the anchoring portions 147, 149 is thus stretched to fasten the sealing member 143 to the valve rotor 107.

In the installed position the sealing member 143 is received in the sealing member groove arrangement 145. Hence, each of the anchors 149a, 149b, 151a, 151b is received in a respective recess of the sealing member groove arrangement 145 and engages therewith. The sealing member 143 is maintained in the sealing member groove arrangement 145 due to the inherent elasticity of the elastic sealing member 143. The sealing member 143 is preferably formed from an elastomeric material, such as, e.g., EPDM.

It will be appreciated that numerous variants of the embodiments described above are possible within the scope of the appended claims.

The embodiments described above concerns fluid valves in the form of mixing valves. However, the invention is not limited to fluid valves of that kind, but can be applied to shut off and diverting valves as well.

Furthermore, the embodiments described above concerns fluid valves having three or four valve ports. However, the invention is not limited to fluid valves of that kind, but can be applied to valves having two valve ports, such as two way shut off valves, or valves having more than four valve ports.

## Claims

1. Use of a liquid control valve for controlling flow of liquid in a heating and/or cooling system in a building, said valve comprising
a valve housing (3; 103) with a valve chamber (5; 105) having at least two valve ports (11, 13, 15, 17; 111, 113, 115) distributed around a circumferential chamber wall (19; 119) of the valve chamber (5; 105),
a valve rotor (7; 107), which is rotatably arranged inside said valve chamber (5; 105) and comprises at least one blocking portion (29, 31; 129) and a flow passage (33; 133),
wherein the valve rotor (7; 107) is rotatable between a closed position, in which one of said at least two valve ports (11, 13, 15, 17; 111, 113, 115) is blocked by said blocking portion (29; 31; 129), and a first open position, in which the flow passage (33; 133) of the valve rotor (7; 107) allows fluid communication between said at least two valve ports (11, 13, 15, 17; 111, 113, 115),
a groove arrangement (45; 145) formed in the valve rotor (7; 107), and
an elastic sealing member (43; 143) which is configured to be received in the groove arrangement (45; 145) and move together with the valve rotor (7; 107), **characterised in that**
said groove arrangement (45; 145) comprises at least two circumferential groove portions (45a, 45b; 145a, 145b) and at least two axial groove portions (45c), and
the sealing member (43; 143) is formed as a single piece and comprises a sealing portion (51; 147), which is configured to surround said blocking portion (29, 31; 129), and at least a first anchoring portion (47; 149, 151) projecting from one side (153) of said sealing portion (51; 147) and being configured to fasten the sealing member (43; 143) to the valve rotor (7; 107), said first anchoring portion (47; 149, 151) comprising at least one anchor (43c; 149a, 151a, 151b) being arranged at a free end thereof for engagement with a portion (45c) of said groove arrangement (45; 145).

2. Use of a liquid control valve according to claim 1, wherein said groove arrangement (145) comprises a recess, such as a circular, an elliptical or a T-shaped recess.

3. Use of a liquid control valve according to any of the preceding claims, wherein said first anchoring portion (149) comprises at least two anchors (149a, 149b).

4. Use of a liquid control valve according to any of the preceding claims, wherein the sealing member (43; 143) comprises a second anchoring portion (49; 151) projecting from an opposite side (155) of said sealing portion (51; 147).

5. Use of a liquid control valve according to claim 4, wherein said second anchoring portion (151) comprises at least one anchor (151a, 151b) for engagement with a portion of said groove arrangement (145).

6. Use of a liquid control valve according to any of the claims 4-5, wherein said first anchoring portion (149) comprises a first anchor (149a) arranged at a first free end thereof and a second anchor (149b) arranged at a second free end thereof, and wherein said second anchoring portion (151) comprises a first anchor (151a) arranged at a first free end thereof and a second anchor (151b) arranged at a second free end thereof.

7. Use of a liquid control valve according to any of the preceding claims, wherein the sealing member (43; 143) is formed from an elastomeric material.

8. Use of a liquid control valve according to any of the preceding claims, wherein the sealing member (43; 143) comprises two parallel members (43a, 43b; 143a, 143b) and at least two intermediate members (43c; 143c) extending therebetween.

9. Use of a liquid control valve according to any of the preceding claims, wherein the sealing member (43) comprises two parallel members (43a, 43b) and at least three intermediate members (43c) extending therebetween.

10. Use of a liquid control valve according to any of the preceding claims, wherein said valve housing (3; 103) has at least three valve ports (11, 13, 15, 17; 111, 113, 115), and wherein the valve rotor (7; 107) is rotatable between a closed position, in which said blocking portion (29, 31; 129) of the valve rotor (7; 107) prevents a flow of fluid through the valve, and a first open position, in which the flow passage (33; 133) of the valve rotor (7; 107) allows fluid communication between at least two of said valve ports (11, 13, 15, 17; 111, 113, 115).

11. Use of a liquid control valve according to claim 10, wherein the fluid control valve has two inlet ports (113, 115) and one outlet port (111).

12. Use of a liquid control valve according to claim 10, wherein the fluid control valve has three inlet ports (13, 15, 17) and one outlet port (11).

## Patentansprüche

1. Verwendung eines Flüssigkeitsregelventils zum Regeln eines Flusses von Flüssigkeit in einem Heiz- und/oder Kühlsystem in einem Gebäude, wobei das Ventil Folgendes umfasst:
ein Ventilgehäuse (3; 103) mit einer Ventilkammer (5; 105), die mindestens zwei Ventilanschlüsse (11, 13, 15, 17; 111, 113, 115) aufweist, die entlang einer umlaufenden Kammerwand (19; 119) der Ventilkammer (5; 105) verteilt sind,
einen Ventilrotor (7; 107), der in der Ventilkammer (5; 105) drehbar angeordnet ist und mindestens einen Sperrabschnitt (29, 31; 129) und einen Strömungsdurchlass (33; 133) umfasst,
wobei der Ventilrotor (7; 107) zwischen einer geschlossenen Position, in welcher einer der mindestens zwei Ventilanschlüsse (11, 13, 15, 17; 111, 113, 115) durch den Sperrabschnitt (29; 31; 129) gesperrt wird, und einer ersten offenen Position drehbar ist, in welcher der Strömungsdurchlass (33; 133) des Ventilrotors (7; 107) eine Fluidverbindung zwischen den mindestens zwei Ventilanschlüssen (11, 13, 15, 17; 111, 113, 115) zulässt,
eine im Ventilrotor (7; 107) gebildete Nutanordnung (45; 145) und ein elastisches Dichtungselement (43; 143), das dafür ausgelegt ist, in der Nutanordnung (45; 145) aufgenommen zu werden und sich zusammen mit dem Ventilrotor (7; 107) zu bewegen,
**dadurch gekennzeichnet, dass**
die Nutanordnung (45; 145) mindestens zwei umlaufende Nutabschnitte (45a, 45b; 145a, 145b) und mindestens zwei axiale Nutabschnitte (45c) umfasst und
das Dichtungselement (43; 143) in einem Stück gebildet ist und einen Dichtungsabschnitt (51;147), der dafür ausgelegt ist, den Sperrabschnitt (29, 31; 129) zu umgeben, und zumindest einen ersten Verankerungsabschnitt (47; 149, 151) umfasst, der von einer Seite (153) des Dichtungsabschnitts (51; 147) abgeht und dafür ausgelegt ist, das Dichtungselement (43; 143) am Ventilrotor (7; 107) zu befestigen, wobei der erste Verankerungsabschnitt (47; 149, 151) mindestens einen Anker (43c; 149a, 151a, 151b) umfasst, der an einem freien Ende davon für einen Eingriff mit einem Abschnitt (45c) der Nutanordnung (45; 145) angeordnet ist.

2. Verwendung eines Flüssigkeitsregelventils nach Anspruch 1, wobei die Nutanordnung (145) eine Ausnehmung, beispielsweise eine kreisförmige, eine elliptische oder eine T-förmige Ausnehmung, umfasst.

3. Verwendung eines Flüssigkeitsregelventils nach einem der vorhergehenden Ansprüche, wobei der erste Verankerungsabschnitt (149) mindestens zwei Anker (149a, 149b) umfasst.

4. Verwendung eines Flüssigkeitsregelventils nach einem der vorhergehenden Ansprüche, wobei das Dichtungselement (43; 143) einen zweiten Verankerungsabschnitt (49; 151) umfasst, der von einer entgegengesetzten Seite (155) des Dichtungsabschnitts (51; 147) abgeht.

5. Verwendung eines Flüssigkeitsregelventils nach Anspruch 4, wobei der zweite Verankerungsabschnitt (151) mindestens einen Anker (151a, 151b) für einen Eingriff mit einem Abschnitt der Nutanordnung (145) umfasst.

6. Verwendung eines Flüssigkeitsregelventils nach einem der Ansprüche 4 bis 5, wobei der erste Verankerungsabschnitt (149) einen an einem ersten freien Ende davon angeordneten ersten Anker (149a) und einen an einem zweiten freien Ende davon angeordneten zweiten Anker (149b) umfasst und wobei der zweite Verankerungsabschnitt (151) einen an einem ersten freien Ende davon angeordneten ersten Anker (151a) und einen an einem zweiten freien Ende davon angeordneten zweiten Anker (151b) umfasst.

7. Verwendung eines Flüssigkeitsregelventils nach einem der vorhergehenden Ansprüche, wobei das Dichtungselement (43; 143) aus einem Elastomermaterial gebildet ist.

8. Verwendung eines Flüssigkeitsregelventils nach einem der vorhergehenden Ansprüche, wobei das Dichtungselement (43; 143) zwei parallele Elemente (43a, 43b; 143a, 143b) und mindestens zwei sich dazwischen erstreckende Zwischenelemente (43c; 143c) umfasst.

9. Verwendung eines Flüssigkeitsregelventils nach einem der vorhergehenden Ansprüche, wobei das Dichtungselement (43) zwei parallele Elemente (43a, 43b) und mindestens drei sich dazwischen erstreckende Zwischenelemente (43c) umfasst.

10. Verwendung eines Flüssigkeitsregelventils nach einem der vorhergehenden Ansprüche, wobei das Ventilgehäuse (3; 103) mindestens drei Ventilanschlüsse (11, 13, 15, 17; 111, 113, 115) aufweist und wobei der Ventilrotor (7; 107) zwischen einer geschlossenen Position, in welcher der Sperrabschnitt (29, 31; 129) des Ventilrotors (7; 107) einen Fluidfluss durch das Ventil verhindert, und einer ersten offenen Position drehbar ist, in welcher der Strömungsdurchlass (33; 133) des Ventilrotors (7; 107) eine Fluidverbindung zwischen mindestens zweien der Ventilanschlüsse (11, 13, 15, 17; 111, 113, 115) zulässt.

11. Verwendung eines Flüssigkeitsregelventils nach Anspruch 10, wobei das Fluidregelventil zwei Einlassanschlüsse (113, 115) und einen Auslassanschluss (111) aufweist.

12. Verwendung eines Flüssigkeitsregelventils nach Anspruch 10, wobei das Fluidregelventil drei Einlassanschlüsse (13, 15, 17) und einen Auslassanschluss (11) aufweist.

## Revendications

1. Utilisation d'une vanne de contrôle de liquide pour le contrôle de l'écoulement de liquide dans un système de chauffage et/ou de refroidissement dans un bâtiment, ladite vanne comprenant un boîtier de vanne (3 ; 103) comportant une chambre de vanne (5 ; 105) dotée d'au moins deux ports de vanne (11,13, 15,17 ; 111,113,115) répartis autour d'une paroi de chambre circonférentielle (19 ; 119) de la chambre de vanne (5 ; 105),
un rotor de vanne (7 ; 107) qui est disposé de manière à pouvoir tourner à l'intérieur de ladite chambre de vanne (5 ; 105) et comprend section de blocage (29,31 ; 129) et un passage d'écoulement (33 ; 133),
le rotor de vanne (7 ; 107) pouvant tourner entre une position fermée dans laquelle un desdits au moins deux ports de vanne (11,13, 15,17 ; 111,113,115) est bloqué par ladite section de blocage (29 ; 31 ; 129) et une première position ouverte dans laquelle le passage d'écoulement (33 ; 133) du rotor de vanne (7 ; 107) permet une communication fluidique entre lesdits au moins deux ports de vanne (11,13, 15,17 ; 111,113,115),
un système à gorge (45 ; 145) formé dans le rotor de vanne (7 ; 107), et
un élément d'étanchéité élastique (43 ; 143) qui est conçu pour être reçu dans le système à gorge (45 ; 145) et se déplace avec le rotor de vanne (7 ; 107),
**caractérisée en ce que**
ledit système à gorge (45 ; 145) comprend au moins deux sections de gorge circonférentielles (45a, 45b ; 145a, 145b) et au moins deux sections de gorges axiales (45c), et
l'élément d'étanchéité (43 ; 143) est réalisé d'une pièce unique et comprend une section d'étanchéité (51 ; 147) qui est conçue pour entourer ladite section de blocage (29,31 ; 129), et au moins une première section d'ancrage (47 ; 149,151) saillant d'une face (153) de ladite section d'étanchéité (51 ; 147) et qui est conçue pour fixer l'élément d'étanchéité (43 ; 143) au rotor de vanne (7 ; 107), ladite première section d'ancrage (47 ; 149,151) comprenant au moins un ancrage (43c ; 149a, 151a, 151b) qui est disposé à son extrémité libre pour s'engager dans une section (45c) dudit système à gorge (45 ; 145).

2. Utilisation d'une vanne de contrôle de liquide selon la revendication 1, dans laquelle ledit système à gorge (145) comprend un retrait, tel qu'un retrait circulaire, elliptique ou en forme de T.

3. Utilisation d'une vanne de contrôle de liquide selon l'une quelconque des revendications précédentes, dans laquelle ladite première section d'ancrage (149) comprend au moins deux ancrages (149a, 149b).

4. Utilisation d'une vanne de contrôle de liquide selon l'une quelconque des revendications précédentes, dans laquelle l'élément d'étanchéité (43 ; 143) comprend une seconde section d'ancrage (49 ; 151) saillant d'une face opposée (155) de ladite section d'étanchéité (51 ; 147).

5. Utilisation d'une vanne de contrôle de liquide selon la revendication 4, dans laquelle ladite seconde section d'ancrage (151) comprend au moins un ancrage (151a, 151b) destiné à s'engager dans une section dudit système à gorge (145).

6. Utilisation d'une vanne de contrôle de liquide selon l'une quelconque des revendications 4 et 5, dans laquelle ladite première section d'ancrage (149) comprend un premier ancrage (149a) disposé à sa première extrémité libre et un second ancrage (149b) disposé à sa seconde extrémité libre, et ladite seconde section d'ancrage (151) comprend un premier ancrage (151a) disposé à sa première extrémité libre et un second ancrage (151b) disposé à sa seconde extrémité libre.

7. Utilisation d'une vanne de contrôle de liquide selon l'une quelconque des revendications précédentes, dans laquelle l'élément d'étanchéité (43 ; 143) est formé d'un matériau élastomérique.

8. Utilisation d'une vanne de contrôle de liquide selon l'une quelconque des revendications précédentes, dans laquelle l'élément d'étanchéité (43 ; 143) comprend deux éléments parallèles (43a, 43b ; 143a, 143b) et au moins deux éléments intermédiaire (43c ; 143c) s'étendant entre eux.

9. Utilisation d'une vanne de contrôle de liquide selon l'une quelconque des revendications précédentes, dans laquelle l'élément d'étanchéité (43) comprend deux éléments parallèles (43a, 43b) et au moins trois éléments intermédiaire (43c) s'étendant entre eux.

10. Utilisation d'une vanne de contrôle de liquide selon l'une quelconque des revendications précédentes, dans laquelle ledit boîtier de vanne (3 ; 103) comporte au moins trois ports de vanne (11,13, 15,17 ; 111,113,115), et le rotor de vanne (7 ; 107) peut tourner entre une position fermée dans laquelle ladite section de blocage (29,31 ; 129) du rotor de vanne (7 ; 107) empêche un écoulement de fluide à travers la vanne, et une première position ouverte dans laquelle le passage d'écoulement (33 ; 133) du rotor de vanne (7 ; 107) permet une communication fluidique entre au moins deux desdits ports de vanne (11,13, 15,17 ; 111,113,115).

11. Utilisation d'une vanne de contrôle de liquide selon la revendication 10, dans laquelle la vanne de contrôle de fluide comporte au moins deux ports d'admission (113,115) et un port d'évacuation (111).

12. Utilisation d'une vanne de contrôle de liquide selon la revendication 10, dans laquelle la vanne de contrôle de fluide comporte trois ports d'admission (13, 15,17) et un port d'évacuation (11).
